Europäisches Patentamt

European Patent Office

Office européen des brevets

(19)

(11) Veröffentlichungsnummer: **0 274 551**
A1

(12) **EUROPÄISCHE PATENTANMELDUNG**

(21) Anmeldenummer: 87100252.3

(22) Anmeldetag: 10.01.87

(51) Int. Cl.4: **B28B 19/00** , F27D 1/06 , F24C 15/24

(43) Veröffentlichungstag der Anmeldung:
20.07.88 Patentblatt 88/29

(84) Benannte Vertragsstaaten:
AT CH DE FR GB IT LI SE

(71) Anmelder: Kanthal GmbH
Aschaffenburger Strasse 7
D-6082 Mörfelden-Walldorf(DE)

(72) Erfinder: Bös, Josef, Ing.
Feldbergstrasse 23
D-6395 Weilrod 2(DE)

(74) Vertreter: Gudel, Diether, Dr.
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Grosse Eschenheimer Strasse 39
D-6000 Frankfurt am Main 1(DE)

(54) Verfahren zum Verbinden eines Isolationskörpers mit einem zweiten Körper.

(57) Beschrieben wird ein Verfahren zum Verbinden eines porösen Isolationskörpers (1) aus keramischem Fasermaterial mit einer plattenförmigen Abdeckung (4), wobei im Isolationskörper nebeneinander mehrere Hohlräume (3) angelegt werden, die mit einer geeigneten Zementmasse (4) vergossen werden, so daß diese in die die Hohlräume (3) umgebenden Wandbereiche des Isolationskörpers eindringt und dadurch dübelartige Verankerungen der Zementmasse ausbildet. Die Zementmasse (4) wird nun in einer solchen Menge auf die betreffende Fläche (2) des Isolationskörpers (1) aufgegeben, daß gleichzeitig mit den dübelartigen Verankerungen die angestrebte plattenförmige Abdeckung (4) des Isolationskörpers (1) hergestellt wird, und zwar aus derselben Zementmasse, aus der auch die dübelartigen Verankerungen bestehen.

EP 0 274 551 A1

## Verfahren zum Verbinden eines Isolationskörpers mit einem zweiten Körper

Die Erfindung betrifft ein Verfahren zum Verbinden eines porösen Isolationskörpers aus keramischem Fasermaterial mit einem zweiten Körper, wobei in den Isolationskörper mehrere von einer Verbindungsfläche her frei zugängliche Hohlräume angelegt werden, in die eine Zementmasse eingegeben wird, die in die die Hohlräume umgebenden Wandbereiche des Isolationskörpers eindringt und die nach der anschließenden Aushärtung der Zementmasse dübelartige Verankerungen der Zementmasse in dem Isolationskörper ergibt.

Ein derartiges Verfahren, welches sich an und für sich gut bewährt hat, beschreibt die DE-OS 3 5l0 l46 der Anmelderin. Zum Verbinden von zwei Isolationskörpern aus keramischem Fasermaterial legt man diese übereinander oder nebeneinander und gießt anschließend die viskose Zementmasse in die Hohlräume ein, wodurch sich die erwähnten dübelartigen Verankerungen ergeben, die beide Körper dann miteinander verbinden.

Ausgehend von diesem bekannten Verfahren liegt der Erfindung die Aufgabe zugrunde, dieses so weiterzubilden, daß der poröse Isolationskörper aus keramischem Fasermaterial an zumindest einer seiner Flächen mit einer plattenförmigen Abdeckung aus einem geeigneten, zementartigen Material versehen werden kann, so daß die Eigenschaften des porösen Isolationskörpers an dieser Fläche den jeweiligen Anforderungen entsprechend gut angepaßt werden können.

Zur Lösung dieser Aufgabe ist die Erfindung dadurch gekennzeichnet, daß die Zementmasse in einer solchen Menge auf die Verbindungsfläche des Isolationskörpers aufgegeben wird, daß gleichzeitig mit den dübelartigen Verankerungen der zweite Körper aus der Zementmasse und einstückig mit den dübelartigen Verankerungen als plattenförmige Abdeckung der Verbindungsfläche des porösen Isolationskörpers hergestellt wird.

Durch diese einfachen Verfahrensschritte erzielt man in überraschender Weise ein anderes Produkt, welches für die porösen Isolationskörper weitere Anwendungsgebiete erschließt. Auf die beschriebene Art und Weise stellt man nämlich gewissermaßen ein Sandwichelement her, bei dem der die eigentliche thermische Isolierung übernehmende Grundkörper oder Isolationskörper aus dem keramischen Fasermaterial an zumindest einer seiner Flächen, nämlich der erwähnten Verbindungsfläche, dauerhaft mit der plattenförmigen Abdeckung aus einem anderen Material versehen ist, nämlich aus der viskosen Zementmasse, die man auch als keramische Gießmasse bezeichnen kann. Die dübelartigen Verankerungen sind einstückig mit der plattenförmigen Abdeckung ausgebildet und durch das Eindringen der viskosen Zementmasse in die die Hohlräume umgebenden Wandbereiche ergibt sich eine einwandfreie und allen Belastungen standhaltende Verankerung der dübelartigen Verankerungen und mit ihnen auch der plattenförmigen Abdeckung im eigentlichen Isolationskörper.

Beim Stand der Technik hat man dagegen mit den erwähnten dübelartigen Verankerungen zwei der porösen Isolations körper aus dem keramischen Fasermaterial miteinander verbunden, und zwar aus Verstärkungszwecken. Bei der vorliegenden Erfindung dagegen werden zwei Körper aus unterschiedlichen Materialien dauerhaft miteinander verbunden.

Die erfindungsgemäß hergestellten Sandwichelemente dienen als Auskleidung und thermische Isolierung von Öfen, die vorzugsweise elektrisch beheizt sind. Sie können aber auch mit Gas oder einer anderen geeigneten Wärmequelle beheizt werden.

Bekannte Öfen (Industrieöfen), die mit derartigen Isolationskörpers aus keramischem Fasermaterial isoliert sind, zeigen nach einer gewissen Betriebszeit eine Alterung der zum Ofeninneren weisenden Oberfläche dieser Isolationskörper, bedingt durch die starke Erhitzung von häufig über 1200° an diesen Flächen. Diese Alterung läßt das dort befindliche keramische Fasermaterial nach einer gewissen Betriebszeit als feines Pulver abbröckeln, wodurch sich dann ein nachteiliger Befall der im Ofen gerade gebrannten Gegenstände oder sonstwie behandelten, erhitzten Materialien ergibt. Durch das erfindungsgemäße Herstellungsverfahren werden dagegen Sandwichelemente hergestellt, die an dieser zum Ofeninneren weisenden Fläche nicht mehr aus dem insoweit nachteiligen keramischen Fasermaterial bestehen, sondern aus einer zementartigen, keramischen Gießmasse, die diese Alterungserscheinungen nicht aufweist. Nach dem erfindungsgemäßen Verfahren hergestellte Isolationselemente können daher auch in Öfen eingesetzt werden, in denen empfindliche Brände gebrannt bzw. erhitzt werden, beispielsweise Keramiken, Porzellan, elektronische Bau elemente und so fort, weil der sonst nachteilige Befall mit Sicherheit ausgeschlossen wird, auch nach langer Betriebsdauer. Mit dem erfindungsgemäßen Verfahren ergeben sich aber noch weitere Vorteile. So hat die plattenförmige Abdeckung eine fühlbar größere Wärmekapazität als der poröse Isolationskörper (Grundkörper) und eine solche fühlbare Wärmekapazität wird bei einigen Anwendungsfällen gewünscht. Man kann das erfindungsgemäße Verfahren nun so führen, daß die Dicke der plattenförmigen Abdeckung so gesteuert wird, daß eine gerade gewünschte Wärmekapazität an der Innenseite der Ofenwand herrscht und diese gewissermaßen gesteuerte Wärmekapazität verhindert eine bei einigen Anwendungsfällen sonst nachteilige Schwankung der im Inneren des Ofens herrschenden Temperatur.

Die sonst verwendeten Isolationskörper aus keramischem Fasermaterial, d.h. ohne die erfindungsgemäße plattenförmige Abdeckung, sind offenporig. Hier gibt es wiederum Anwendungsfälle, bei denen im Ofeninneren ein Überdruck herrscht, so daß die heißen Gase durch die offenen Poren durch die gesamte Dicke der eigentlichen Isolationskörper hindurchstreichen und daher sehr - schnell die Isolationskörper über ihre gesamte Wanddicke auf eine sehr hohe Temperatur erwärmen, so daß diese ihre Isolationswirkung hierbei in wesentlichem Maße einbüßen. Auch dieser Effekt wird durch die erfindungsgemäße Verfahrensführung verhindert, weil nämlich die Abdeckung luftundurchlässig ist, so daß die offenporigen Isolationskörper an der hier kritischen Innenseite des Ofens gewissermaßen abgedichtet werden.

Ein weiterer Anwendungsfall für die nach dem erfindungsgemäßen Verfahren hergestellten Sandwichelemente ergibt sich bei Muffelöfen, bei denen die untere Arbeitsfläche - wie auch die Wände und die Decke - aus den Isolationskörpern aus keramischem Fasermaterial besteht. Diese können schon bei geringen Drücken von ihrer Oberfläche her beschädigt werden. Um dies zu vermeiden hat man bisher auf die Oberfläche des Bodens dieser Muffelöfen eine geeignete Platte aufgelegt, die Beschädigungen der darunter befindlichen Bodenschicht vermeiden sollte. Nach dem erfindungsgemäßen Verfahren hergestellte Sandwichelemente machen diese gesonderte Abdeckung entbehrlich, weil die plattenförmige Abdeckung aus dem Zementmaterial mechanisch widerstandsfest ist.

Das erfindungsgemäße Verfahren kann auch so geführt werden, daß elektrische Heizelemente in die Zementmasse eingebettet werden, bevor diese aushärtet. Auch hierbei kann man die Dicke der aufgebrachten Zementschicht so steuern, daß die Heizelemente bis zu einer gewünschten Höhe, ggfs. sogar zur Gänze, in der Zementmasse eingebettet werden. Es erübrigen sich somit gesonderte Vorkehrungen zum Halten der elektrischen Heizelemente.

Üblicherweise wird man zur Herstellung eines erfindungsgemäßen Sandwichelements zunächst in der Verbindungsfläche des Isolationskörpers die Hohlräume in einer ausreichenden Anzahl über die Fläche verteilt anlegen, wie dies schon in der eingangs erwähnten deutschen Offenlegungsschrift 3 510 146 beschrieben ist, d.h. beispielsweise durch Formen von Sacklöchern gleichzeitig mit dem Formen dieser Isolationsblöcke. Man legt dann den Isolationskörper so in eine Form, daß dessen Verbindungsfläche nach oben weist und anschließend gibt man die Zementmasse in ausreichender Menge auf. Nach dem Erhärten der Zementmasse ist das Sandwichelement gebrauchsfertig. Gggfs. hat man vor dem Aushärten der Zementmasse noch die Heizelemente von der Oberseite her in die Zementmasse eingedrückt.

Man kann aber auch gewissermaßen umgekehrt vorgehen derart, daß man zuerst die Zementmasse in die Form eingibt und dann den Isolationskörper mit seiner Verbindungsfläche mit darin angelegten Hohlräumen von oben auf die noch viskose Zementmasse auflegt und in die Zementmasse eindrückt, wodurch sich dann die beiden Materialien ebenfalls innig miteinander verbinden.

Es sei erwähnt, daß bei der erfindungsgemäßen Verfahrensführung die beiden Materialien sich nicht nur in Bereichen der Hohlräume miteinander verbinden, sondern vollflächig über die gesamte Verbindungsfläche, weil natürlich auch dort die viskose Zementmasse in die offenen Poren des Isolationskörpers eindringt und dadurch eine Verankerung der Materialien miteinander erfolgt, ebenfalls im Gegensatz zur Lehre der eingangs erwähnten deutschen Offenlegungsschrift, wo diese Verbindung nur im Bereich der Hohlräume (Sacklöcher) erfolgte.

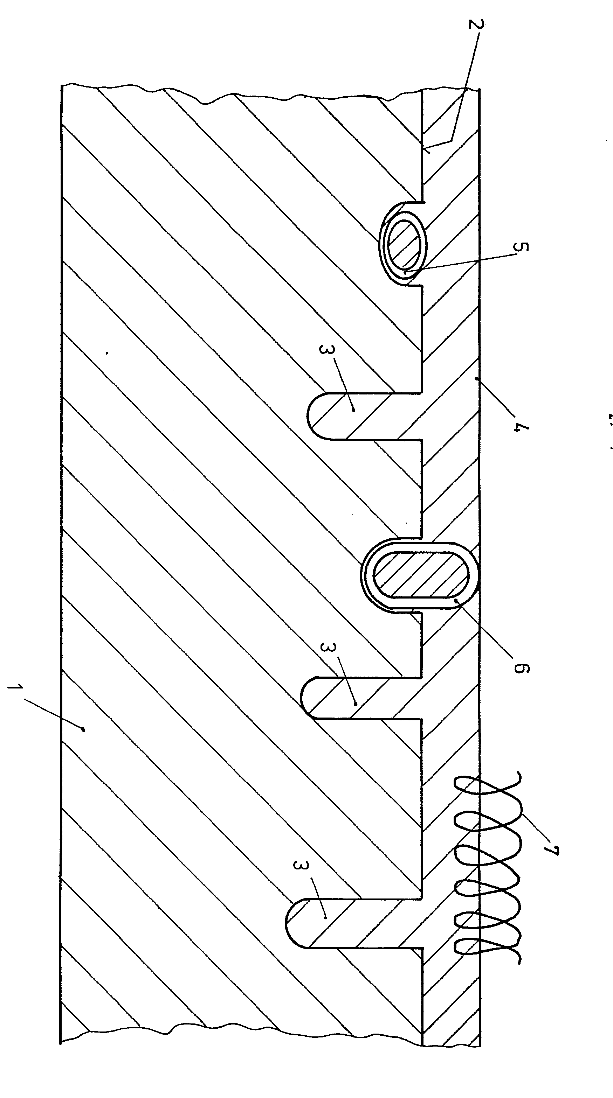

Die Erfindung wird im folgenden anhand von Ausführungsbeispielen näher erläutert, aus denen sich weitere wichtige Merkmale ergeben. Die Figur zeigt schematisch einen Schnitt durch ein Sandwichelement nach der Erfindung.

Das gezeigte Sandwichelement besteht aus einem porösen Isolationskörper I aus keramischem Fasermaterial, der eine Verbindungsfläche 2 hat. In den Körper I sind von der Verbindungsfläche 2 her frei zugängliche Hohlräume oder Sacklöcher 3 angelegt, von denen nur einige schematisch dargestellt sind. Es ist eine geeignete Anzahl dieser Hohlräume über die Fläche 2 verteilt vorgesehen.

Zur Herstellung des Sandwichelementes wird ein geeignetes, viskoses Zementmaterial (eine keramische Gießmasse) von oben auf den Körper I aufgegeben derart, daß die Zementmasse in die Hohlräume 3 eindringt und diese ausfüllt. Das poröse Material des Körpers I saugt den Wasseranteil des Zementmaterials auf und zieht hierbei das eigentliche, zementartige Bindemittel mit sich, wodurch sich eine gute Verankerung (ein Verkrallen) des Zementmaterials im Material des Körpers I ergibt. Man gibt nun soviel Zementmaterial in die Form ein, daß gleichzeitig mit den in den Hohlräumen 3 ausgebildeten dübelartigen Verankerungen eine plattenförmige Abdeckung 4, ebenfalls aus diesem Zementmaterial, aufgebaut wird, die in der beschriebenen Art und Weise dauerhaft und gut mit dem eigentlichen Isolationskörper I verbunden ist.

Das Sandwichelement kann an seiner zum Inneren des Ofens weisenden Fläche auch mit elektrischen Heizleitern versehen sein.Hier zeigt die Figur einige Aus führungsmöglichkeiten nämlich links eine erste Heizwendel 5, die in eine entsprechende Vertiefung in der Fläche 2 des Körpers I eingelegt ist. Die Heizwendel 5 ist zur Gänze in die plattenförmige Abdeckung 4 eingebettet.

Eine weitere Heizwendel 6 hat eine Oberseite, die mehr oder weniger mit der Oberseite der Platte 4 abschließt.

Schließlich ist rechts in der Figur ein Ausführungsbeispiel gezeigt, bei dem Heizwendeln 7 derart von oben in die noch viskose Zementmasse eingedrückt sind, daß sie dort gut verankert werden, aber mit einem Teil ihrer Wendeln aus der Abdeckung 4 vorstehen.

Es ist ersichtlich, daß die Abdeckung 4 in einer beliebigen Dicke hergestellt werden kann. Auch können die in die Vertiefungen des Körpers I eingelegten Heizwendeln 5, 6 zu einem Teil aus der Platte 4 vorstehen, ähnlich wie bei der Heizwendel 7 gezeigt.

## Ansprüche

1. Verfahren zum Verbinden eines porösen Isolationskörpers (I) aus keramischem Fasermaterial zur Verwendung in einem Industrieofen mit einem zweiten Körper, wobei in dem Isolationskörper mehrere von einer Verbindungsfläche (2) her frei zugängliche Hohlräume (3) angelegt werden, in die eine Zementmasse eingegeben wird, die in die die Hohlräume (3) umgebenden Wandbereiche des Isolationskörpers (I) eindringt und die nach der anschließenden Aushärtung der Zementmasse dübelartige Verankerungen der Zementmasse in dem Isolationskörper (I) ergibt, **dadurch gekennzeichnet,** daß die Zementmasse in einer solchen Menge auf die Verbindungsfläche (2) des Isolationskörpers (I) aufgegeben wird, daß gleichzeitig mit den dübelartigen Verankerungen der zweite Körper aus der Zementmasse und einstückig mit den dübelartigen Verankerungen als plattenförmige Abdeckung (4) der Verbindungsfläche (2) des porösen Isolationskörpers (I) hergestellt wird.

2. Verfahren nach Anspruch I, **dadurch gekennzeichnet,** daß Heizelemente (5, 6, 7) in die Zementmasse eingebettet werden, bevor diese aushärtet.

Kanthal

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 030 944 (LINCO GmbH) <br> * Insgesamt * | 1 | B 28 B 19/00 <br> F 27 D 1/06 <br> F 24 C 15/24 |
| Y | FR-A-2 576 621 (DIDIER-WERKE AG) <br> * Insgesamt * | 1,2 | |
| Y | DE-A-2 517 095 (VAN EGTEREN INDUSTRIELE CONSTRUCTIEBETON MIJ B.V.) <br> * Insgesamt * | 1,2 | |
| Y | GB-A-2 086 565 (SOLARONICS VANEECKE) <br> * Insgesamt * | 2 | |
| Y | US-A-2 908 157 (FOSTER WHEELER CORP.) <br> * Insgesamt * | 1,2 | **RECHERCHIERTE SACHGEBIETE (Int. Cl.4)** <br><br> B 28 B <br> B 29 C <br> F 16 L |
| Y | GB-A-2 102 106 (MORGANITE CERAMIC FIBRES LTD.) <br> * Insgesamt * | 1,2 | F 24 C <br> F 27 D |
| Y | EP-A-0 160 926 (GENERAL SIGNAL CORP.) <br> * Insgesamt * | 2 | |

Der vorliegende Recherchenbericht wurde für alle Patentansprüche erstellt.

| Recherchenort | Abschlußdatum der Recherche | Prüfer |
|---|---|---|
| DEN HAAG | 07-10-1987 | GOURIER P.A. |